(19) Europäisches Patentamt

European Patent Office

Office européen des brevets

(11) **EP 1 004 908 A1**

(12) **EUROPEAN PATENT APPLICATION**

(43) Date of publication:
31.05.2000 Bulletin 2000/22

(51) Int. Cl.$^7$: **G02B 6/293**, H04J 14/02

(21) Application number: 99203784.6

(22) Date of filing: 12.11.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 27.11.1998 EP 98122409

(71) Applicant: PIRELLI CAVI S.p.A.
20126 Milano (IT)

(72) Inventors:
• **Pianciola, Aurelio**
  27045 Casteggio (IT)
• **Scotti, Simona**
  27058 Voghera (IT)

(74) Representative:
**Marchi, Massimo, Dr. et al**
**Marchi & Partners,**
**Via Pirelli, 19**
**20124 Milano (IT)**

(54) **Modular filter for extracting optical signals from, and/or inserting them into, multiple-wavelength optical telecommunications systems**

(57) Modular filter for extracting and/or inserting or processing optical signals in multiple-wavelength optical telecommunications systems, comprising a wavelength multiplexer/demultiplexer device having N first ports for receiving a multiple-wavelength signal and a number N of second ports into which the said wavelengths are divided, and N/2 branches which interconnect the said N second ports into which the said wavelengths are divided. In each of the said branches there is a signal processor device for extracting and inserting the wavelengths circulating in the branch, this device comprising a wavelength-selective filter.

Fig.2

EP 1 004 908 A1

**Description**

The present invention relates to an optical telecommunications system, for the transmission of a signal of the wavelength division multiplexing type, also called WDM, in which this signal can be extracted from the line in at least one of a plurality of intermediate stations located along the telecommunications path, in the form of some of its wavelength components, which can if necessary be replaced by components having the same wavelengths or can be processed (amplified, equalized, etc.) and subsequently reinserted into the line by multiplexing in such a way that the new WDM signal is regenerated. These operations on the signal can also take place at terminal stations.

For wavelength division multiplexing, or WDM, transmission, it is necessary to send a plurality of transmission signals, which are independent of each other, along the same line, consisting of optical fibres, by multiplexing in the optical wavelengths domain; the transmitted signals may be either digital or analog, and are distinguished from each other in that each of them has a specific wavelength which is different from those of the other signals.

The implementation of this WDM transmission requires the allocation of specific wavebands of predetermined width, called "channels" in the following text, to each of the signals having different wavelengths. These channels, each identified in the following text by a wavelength value, called the central wavelength of the channel, carry a signal having a certain spectral amplitude about the central wavelength value, which depends, in particular, on the characteristics of the laser source of the signal and on the modulation imparted to it to associate a data item with the signal. Typical values of spectral amplitude of the signal emitted by a laser, in the absence of modulation, are around 10 MHz; in the presence of an external modulation, at 2.5 Gbit/s for example, the spectral amplitude is approximately 5 GHz.

For transmitting signals in a large number of channels, making use of what is called the third transmission window of the optical fibres and of the pass band of the optical amplifiers, the wavelength separation between the signals is conveniently of the order of nanometres.

For the purposes of the present description, the WDM or multiple-wavelength signal is defined as the signal travelling along a single optical fibre and containing at least two components having different wavelengths.

In a multiple-wavelength telecommunications network, the said WDM signals can advantageously be extracted, particularly at the intermediate stations of the transmission line, for example at the signal amplification stations, and signals having a different information content but the same wavelength can be inserted in their place. In this way, these stations become nodes at which the information passing along the line can be extracted, modified and/or replaced by terminal equipment or by a different network which communicates with such nodes.

In general, in a communications line, a device of this type for extracting optical channels from the line and inserting them into it, connected within an intermediate station, causes the formation of a node in the line in which the data can be redistributed and modified.

A first technique for carrying out the operation of extracting these signals from the telecommunications line uses WDM signal demultiplexing devices which separate the various channels so that each is sent along its own fibre. The extraction of the optical channels and the insertion by means of optical switches or combining devices suitable for the purpose takes place in these lengths of fibre.

Patent EP 651528 (Siemens) describes an insertion and extraction filter comprising a first device for demultiplexing a WDM signal, which separates the various channels from each other and sends each of them along one length of optical fibre. In this length, each of the signals, each of which is contained in one channel, can be extracted individually by means of optical switching devices and, simultaneously, a signal at the same wavelength can be reinjected into the same fibre. Additionally, any signal may simply pass through the length of optical fibre without undergoing modifications. All the channels reach the output of the filter, after passing through a multiplexing device which reconstructs the WDM signal.

The applicant has observed that this type of technology presents problems caused principally by the difficulty of providing spectral compatibility between the demultiplexing device and the multiplexing device following the extraction and insertion of the signals. This is because the demultiplexed signal generates a series of signals, each at a specific wavelength, which, after they have been extracted and replaced by signals at corresponding wavelengths where necessary, have to be multiplexed to reconstruct the WDM signal. The operation described is efficient only if the multiplexing device and the demultiplexing device have perfectly matched wavelength responses. The matching may be degraded by many factors, for example different design characteristics, or a differential relative thermal variation between the two components. In practice, the separation of the two components which carry out the two functions of multiplexing and demultiplexing is critical in this configuration.

A second technology integrates both of the said functions in a single component called a wavelength multiplexer/demultiplexer of the "Arrayed Waveguide Grating" type, referred to as AWG in the following text, which enables a multiple-wavelength signal inserted in one of a plurality of input fibres to be demultiplexed and distributed among a number of output fibres corresponding to the number of wavelengths of which the said signal consists. If provided with a plurality of wavelengths, the device is also capable of multiplexing different channels and different wavelengths in a single output fibre. The mode of operation of these devices is described, for example, in the article by H. Takahashi et al., "Transmission Characteristics of Arrayed Waveguide NxN Wavelength Multiplexer", J. of Light. Techn., vol. 13, No. 3, March 1995, pp. 447-455.

The said component has characteristic parameters which define the nature and number of the wavelengths which the component can separate; these parameters are the number of inputs and outputs, the wavelength spacing which must be present between two adjacent channels so that these can be separated, and the wavelength of the central channel of the band of channels which the component can process.

A further parameter of the AWG is the FSR (Free Spectral Range) which represents the periodicity of an AWG. This is because the device is capable of extracting, at each individual output, a signal having a specific wavelength $\lambda$ and, also, signals having a wavelength $\lambda+nFSR$, where n is a positive or negative integer. This takes place at each output, and consequently the filter has a periodicity defined by the FSR.

A component of this type is available on the market (produced, for example, by NEL, PIRI, Hitachi, Lucent, etc.). An AWG is described, for example, in U.S. Patent 5600742. The AWG generally comprises a number N of input fibres and a number N of output fibres for the signals. The component is bidirectional and therefore each of the input fibres may be used as an output fibre, and vice versa.

The principal parameters which determine the performance of this component are the insertion loss (IL) and two noise contributions which are defined as "out-of-band crosstalk" and "in-band crosstalk". The former represents the contribution to an output of all the other wavelengths which nominally are not coupled to this output. The in-band crosstalk, on the other hand, is an interference system, having the same wavelength as the said signal. This may be due, for example, to the presence of signals using multiple paths within the device.

U.S. Patent 5,414,548 describes an insertion and extraction device which makes use of the characteristics of an AWG which can be used to demultiplex a multiple-wavelength signal inserted into one of a plurality of input fibres and to distribute it to a number of output fibres corresponding to the number of wavelengths of which the said multiple-wavelength signal consists.

The said device comprises an AWG having a plurality of inputs and a plurality of outputs. The WDM signal is inserted into one of the inputs of the AWG in such a way that it generates a signal having a single wavelength at each of the corresponding outputs. Each of the said outputs is connected to a length of optical fibre through which the signal passes, and in which is located a switch which extracts and reinjects a signal having nominally the same wavelength in the said length of fibre. Each of the said lengths of fibre reinjects the signal into an input of the AWG, thus creating a configuration described as "loopback" because the output signal of the AWG is reinserted into the input. All the signals reinjected into the input reconstruct the WDM signal at one of the outputs of the AWG.

The applicant has observed that a device for the extraction and insertion of optical channels with a configuration of the loopback type using an AWG with N inputs is capable of processing N-1 channels (consequently N-1 loopback channels are present). AWGs do not have the same transfer characteristics for identical signals inserted at different inputs. This is because the best operating efficiency, in other words the minimum IL, in an AWG is obtained for signals which have the central wavelength of the complete range which the component can process, and are therefore closest to N/2 at the inputs, which are numbered progressively from 1 to N.

The applicant has observed that the losses due to the attenuation introduced by the component for signals inserted into these inputs are smaller than those affecting the signals inserted into the outer inputs. Consequently, in a configuration of the loopback type, if the signals are separated and reinjected into corresponding identical outputs and inputs, the non-uniformity of the paths is doubled. The applicant has found that, when a configuration of the loopback type is used, it is advantageous to select the input-output combinations in a suitable way, in order to maximize the uniformity; this is possible only if $FSR = N \cdot \Delta\lambda$, where N is equal to the number of outputs and $\Delta\lambda$ is the spacing between the wavelengths (channels) which the device can separate. The combinations usable with low non-uniformity are therefore limited and may not be those which are best for the purposes of optimizing the crosstalk performance. The latter parameter, in fact, represents a considerable limitation on loopback configurations: this structure is intrinsically highly sensitive to the in-band crosstalk, which is the most critical factor for the performance of the system.

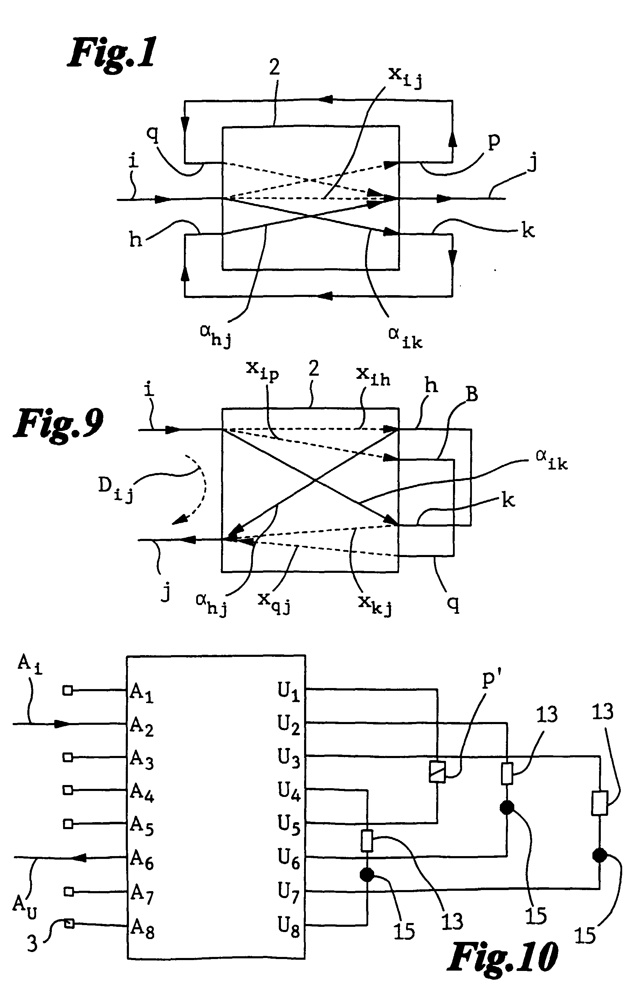

The diagram in Figure 1, representing an AWG in loopback configuration according to the prior art, shows the generic path of a channel $\lambda_k$ which enters at the port i, together with all the other channels of the WDM signal, and exits from the port k; this signal is nominally propagated in the path i-k, and then continues in the branch k-h in the loopback configuration and subsequently re-enters from the port h and finally exits from the port j. If $\alpha_{ik,hj}$ denotes the attenuations affecting the signal through the AWG, where, in particular, $\alpha_{ik}$ is the attenuation affecting the signal as it enters from the port i and exits from the port k, and $\alpha_{hj}$ is the attenuation affecting the signal as it enters from the port h and exits from the port j, the level of in-band crosstalk generated by the undesired contribution $X_{ij}(\lambda_k)$, in other words by the nominally cancelled part of the signal, at the wavelength $\lambda_k$, which is transmitted directly from the port i to the port j, is equal to:

$$\frac{X_{ij}(\lambda_k)}{\alpha_{ik}\alpha_{ik}}$$

This is because all the crosstalk contributions due to the residual signal propagated in the loopback paths p-q are negligible by comparison with the direct contribution $X_{ij}$.

Assuming for simplicity that $\alpha_{ik} = \alpha_{kj} = \alpha_{ij} = \alpha$ and $X_{ij}(\lambda_k) = X$, and bearing in mind that for a commercial device it is possible that $(X/\alpha)_{dB} = 25 \text{ dB}$ and $(\alpha)_{dB} = 5 \text{ dB}$, we note that the in-band crosstalk for the configuration in Figure 1 will be equal to: $(X/\alpha^2)_{dB} = 20 \text{ dB}$, a value which is insufficient to ensure transmission with a good signal-to-noise ratio.

The article by O. Ishida et al., published in Photonics Technology Letters, vol. 6, No. 10, Oct. 1994, pp. 1219-1221, describes a multiple-selection switch using an AWG in a configuration called "foldback", in other words one in which the signals from other outputs, which have therefore already been selected in terms of wavelength, are reinserted into some outputs of the AWG; this is done by means of branches consisting of lengths of fibre between which switching can be carried out in order to provide a 2 x 2 switch operating by wavelength division. Each switch, in one state, generates a loopback configuration in the branch in which it is connected, and a foldback configuration in the other branch. The experiment demonstrated that the performance in the foldback configuration was better than that of the loopback configuration.

The applicant has tackled the problem of providing a modular filter for extracting and/or reinserting or processing a desired number of channels at the node of an optical telecommunications network, in a configuration which enables the losses to be balanced and the crosstalk noise to be minimized for all the channels making up the WDM signal.

In particular, an efficient configuration which uses an NxN AWG and is of the type described previously as "foldback" has been invented. In this configuration, in an AWG with N inputs and outputs, which can therefore separate N signals, each containing at least one wavelength, $Q \leq N/2$ outputs are connected to the remaining Q outputs by means of Q branches, each comprising at least one length of fibre. A signal processor device, comprising at least one filter with a spectral response such that it transmits the signal at the wavelength or wavelengths which nominally pass through the said branch and cancels the contributions at other wavelengths, is connected in at least one of the branches.

The applicant has found that in this way it is possible to obtain a significant reduction of the crosstalk of the AWG, and in particular of its in-band crosstalk. An attenuator which equalizes the recombined WDM signal may also be provided in the branch in question. If desired, the signal processor comprises a device for inserting and/or extracting signals in a corresponding branch.

A first aspect of the present invention relates to an optical telecommunications system comprising:

- at least one transmission station capable of transmitting a multiple-wavelength optical signal comprising at least two predetermined wavelengths;
- a wavelength division multiplexer for sending the said transmission signals to an optical fibre transmission line;
- at least one station for receiving the said transmission signals;
- the said optical fibre line connecting the said transmission and receiving stations;
- a modular filter for extracting and/or inserting and/or processing optical signals, comprising:

    - a wavelength multiplexer/demultiplexer device having at least two first ports for connection to the said line and a number N of second ports into which the said wavelengths are divided;
    - a number Q, less than or equal to N/2, of branches which interconnect 2Q of the said N second ports into which the said wavelengths are divided,

characterized in that at least one of the said branches comprises a signal processor device for at least one of the wavelengths circulating in the branch.

In particular, the said modular filter introduces an in-band crosstalk of the said multiple-wavelength optical signals of less than 40 dB.

A further aspect of the present invention relates to a modular filter for extracting and/or inserting and/or processing optical signals, comprising:

- a wavelength multiplexer/demultiplexer device having at least two first ports for a multiple-wavelength signal and a number N of second ports into which the said wavelengths are divided;
- a number Q, less than or equal to N/2, of branches which interconnect 2Q of the said N second ports into which the said wavelengths are divided,

characterized in that it has, in at least one of the said branches, a signal processor device for at least one of the wavelengths circulating in the branch.

Preferably, the said signal processor device comprises a wavelength-selective filter.

Alternatively, the said signal processor device comprises an attenuator.

In particular, the said signal processor device comprises a switch.

Preferably, the said signal processor device comprises:

- a first signal multiplexer/demultiplexer capable of separating the wavelengths of the signals from one of the said second ports into at least two branches;
- a second multiplexer/demultiplexer capable of combining the said wavelengths of the signals from the two branches at another of the said second ports,
- a switch connected in at least one of the two branches.

Alternatively, the said signal processor device comprises:

- a first signal divider device capable of dividing the signal injected into one of the said second ports into a first and a second branch;
- a filter tuned to a first wavelength and a switch connected in series in the first branch;
- a filter tuned to a second wavelength different from the first, connected in the second branch;
- a second signal divider device, capable of dividing a signal injected at another of the said second ports into the two branches, and of recombining the said signals.

Preferably, the said N/2 branches are connected to the said device in such a way as to interconnect N/2 remote second ports.

In particular, the said switch comprises two input ports and two output ports, and is capable of sending the signal passing through each of the two inputs selectively to either of the two outputs in response to an operating signal.

In particular, the said wavelength multiplexer/demultiplexer comprises an AWG having at least 2 input ports and N output ports.

Alternatively, the said signal processor device comprises an additional AWG having at least two input ports and N output ports.

A further aspect of the present invention relates to a modular filter for generating optical signals for multiple-wavelength telecommunications systems, comprising:

- a wavelength multiplexer/demultiplexer having at least a first port for receiving a wide-band signal and a number N of second ports in which the said signal is divided into at least N wavelengths and a third port for the output of the said optical channels;
- a transmitter having a spectral amplitude greater than that of the said wavelength multiplexer/demultiplexer,

characterized in that it has

N/2 branches which interconnect the said N second ports into which the said wavelengths are divided, and which are connected in such a way as to associate N/2 remote ports with each other.

Preferably, a wavelength-selective filter is connected in at least one of the said branches.

Alternatively, an attenuator is connected in at least one of the said branches.

In particular, a radio-frequency modulator is connected in at least one of the said branches.

In particular, the said modulator is an electro-optical modulator or an acousto-optical modulator.

A further aspect of the present invention relates to a method for processing a multiple-wavelength signal, characterized in that it has the following stages:

- dividing the wavelengths of the said multiple-wavelength signal present at an input port of a wavelength multiplexer/demultiplexer device among a number N of intermediate ports, in such a way that one or more nominal wavelengths are associated with each port;
- sending the said divided wavelengths to a number of branches less than or equal to N/2;
- extracting from at least one of the said branches at least one of the signals circulating in the branch;
- selectively filtering in each branch the signals at the nominal wavelengths circulating in the branch in question;
- reinjecting these signals into a different intermediate port of the said multiplexer/demultiplexer device;
- re-multiplexing the said signals at an output of the said multiplexer/demultiplexer device.

In particular, the stage of selectively filtering in each branch additionally comprises the stage of attenuating the signals circulating in the branches, by a predetermined amount for each signal.

In particular, the stage of reinjecting these signals comprises reinjecting these signals into a total of N/2 remote intermediate ports.

A further aspect of the present invention relates to a method for reducing the crosstalk in an NxN AWG which processes a multiple-wavelength signal, characterized in that it comprises the following stages:

- sending a multiple-wavelength signal to an input of the said AWG;
- dividing the components of the WDM signal into a number N of output ports of the said AWG;
- sending the said divided wavelengths to N/2 branches;
- selectively filtering, in each branch, the signals at the nominal wavelength circulating in the branch in question;
- reinjecting these signals by means of the said N/2 branches into the same AWG;

- multiplexing the said signals by means of the same AWG;

- extracting the re-multiplexed multiple-wavelength signal from an output of the said AWG.

Further details may be obtained from the following description, with reference to the attached drawings, which show:

in Figure 1, a general circuit of an AWG in a configuration of the "loopback" type, showing the crosstalk paths, according to the prior art;

in Figure 2, a general circuit of a modular filter for processing the individual optical channels according to the present invention;

in Figure 3, a signal processor device for extracting and/or inserting optical channels according to one embodiment of the present invention;

in Figure 4, an operating circuit for the modular filter shown in Figure 2, in which the signal processor device is that illustrated in Figure 3;

in Figure 5, a signal processor device for extracting and/or inserting optical channels according to a further embodiment of the present invention;

in Figure 6, a signal processor device for extracting and/or inserting optical channels according to a further embodiment of the present invention;

in Figure 7, an operating circuit for the modular filter shown in Figure 2, in which the signal processor device is that illustrated in Figure 5;

in Figure 8, a modular filter for extracting and/or inserting optical channels with a plurality of stages, according to a further embodiment of the present invention;

in Figure 9, a general circuit of an AWG in a configuration of the "foldback" type, showing the crosstalk paths;

in Figure 10, a circuit of an experimental embodiment of a modular filter for extracting and/or inserting optical channels according to the present invention;

in Figure 11, a circuit of an experimental embodiment of a signal processor device for extracting and/or inserting optical channels according to the circuit in Figure 5;

in Figure 12, a spectral response of the wavelength combining (dividing) device used in the circuit in Figure 11;

in Figure 13, a transmitter for WDM signals, using a modular filter according to the present invention.

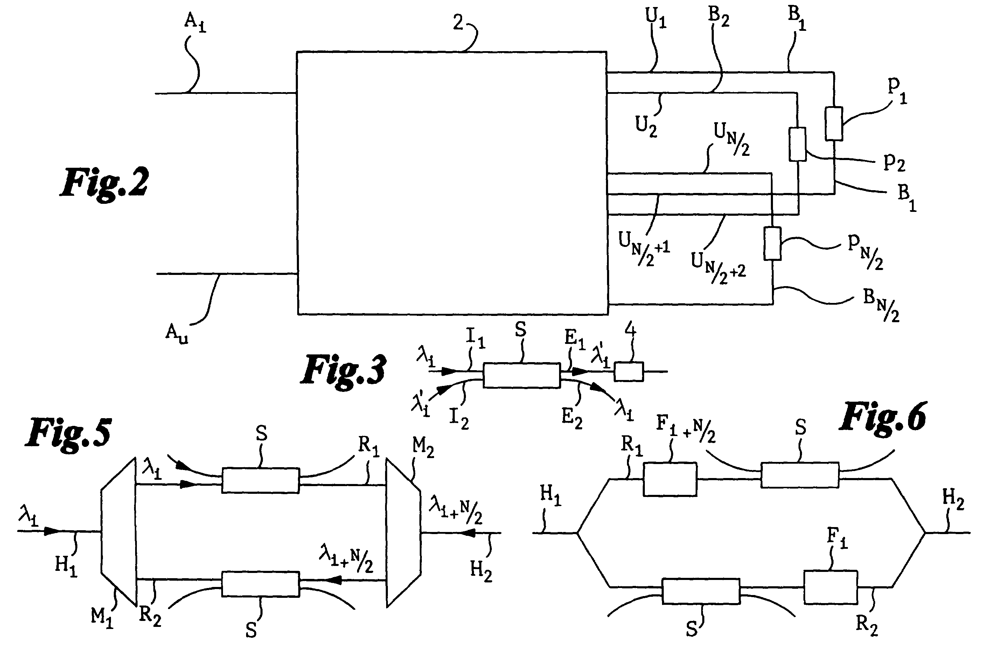

Figure 2 shows a modular filter comprising an AWG 2 shown, by way of example, with N inputs and N outputs. To provide an example of the present invention, the NxN AWG is selected to have an $FSR = N \cdot \Delta\lambda$, where $\Delta\lambda$ is the separation between adjacent channels. It should be noted that the filter according to the present invention can be made with devices of the AWG type having any number of inputs and outputs. The number of inputs and outputs is related to the number of wavelengths which are to be processed by means of the filter. In particular, we shall consider by way of example a filter based on an NxN AWG and capable of operating on a WDM signal containing from N/2 to N wavelengths which are different from each other. Additionally, the filter is bidirectional, and therefore the input may be used as the output, and vice versa.

For the purposes of the present invention, the modular filter for extracting and/or inserting or processing optical channels in multiple-wavelength optical telecommunications systems comprises a wavelength multiplexer/demultiplexer device having at least two ports, one for the input and one for the output of a multiple-wavelength signal, and a number N of ports into which the said wavelengths are divided. This operation is carried out by an AWG, but other devices which carry out the same function can be used in an equivalent way.

The WDM signal is inserted at one of the inputs $A_i$ of this AWG, and is distributed, according to the wavelengths which it contains, among M of the N outputs, where M = N/2...N , of the AWG.

Each of the branches comprises an optical path, for example one made from optical fibres. The optical connections between the branches B and the AWG are made by known techniques which are known as "pigtailing" in the case of branches made from optical fibres. Similarly, the inputs of the AWG are optically connected to optical input paths such as, for example, the optical fibres $A_i$, $A_u$ connected to the AWG by means of suitable "pigtailing".

The N outputs $U_1$, $U_2$...$U_N$ of the component are interconnected by a number N/2 of branches $B_1$, $B_2$...$B_{N/2}$; consequently forming what was previously defined as a "foldback" configuration. Owing to the periodicity properties of an NxN AWG with FSR = $N \cdot \Delta\lambda$ , the selection of the input $A_i$ out of the N possible inputs determines the distribution of the wavelengths among the outputs. In the configuration in Figure 2, which is provided by way of example but is not exclusive, the output $U_1$ is connected to the output $U_{N/2+1}$ through the branch B1, the output $U_2$ is connected to the output $U_{N/2+2}$ through the branch $B_2$, and the output $U_{N/2}$ is connected to the output $U_N$ through the branch $B_{N/2}$. In each of the said branches there is a signal processor device $P_1$...$P_{N/2}$ which can be used to extract and/or insert and/or process individual components which form the WDM signal. For example, the device comprises a switch, a filter, a pair of optical fibre terminations, an attenuator or a further AWG. Examples of such a device will be described in detail in the following text according to three corresponding embodiments, shown in Figures 3, 5 and 6.

The WDM signal is globally reconstructed after the double passage in the AWG at one of the remaining in puts Au.

The selection of the input fibres Ai and Au, and consequently of the connections between the outputs, may advantageously be made according to the characteristics of the component, by calculating the paths inside the AWG of all the signals at individual wavelengths which make up the WDM signal, in such a way as to optimize the global attenuation of the filter and in such a way as to distribute this attenuation equally among all the paths (maximum uniformity). In particular, it is advantageously possible to interconnect pairs of equidistant outputs $A_i \, A_{i+N/2}$. The AWG component (with FSR = $Nx\Delta\lambda$, where N is the number of ports and $\Delta\lambda$ is the spacing between the channels) used as a demultiplexer has a distribution of losses with a non-uniformity which may be, for example, 2-3 dB; the configuration with pairs of equidistant outputs indicated above, whether a number of channels <= N/2 or a number of channels >N/2 is to be processed, enables the non-uniformity of the insertion losses IL at the output port to be reduced by at least half with respect to that of the AWG component used as a demultiplexer solely by selecting the ports Ai and Au in a suitable way.

Additionally, by using fixed attenuators with suitable IL in the connecting branches $B_1$, $B_2...B_{N/2}$, it is also possible to compensate the insertion loss (up to less than 0.5 dB) in the different paths; by using devices having a spectral response such that the propagation of only the wavelengths required for the branch in question is permitted, and having a calibrated IL, it is possible to suppress the crosstalk contributions as well as to equalize the losses.

In order to achieve this, use is made of a procedure which comprises:

- the complete spectral characterization of the AWG (for example, in the case of an NxN type, $N^2$ spectral responses will be obtained) and the characterization of the components (e.g. switches, attenuators, and filters);
- the simulation of all the possible configurations which can be obtained, according to the pair of ports Ai and Au, by connecting the output ports of the AWG (without any other component present in the branch), in terms of IL and contributions to the in-band crosstalk:
- the selection of the optimal configurations in terms of IL and contributions to the crosstalk: the pair of ports Ai and Au is that which provides a minimum channel-by-channel insertion loss with the minimum non-uniformity. A check is also made to ensure that the contributions to the crosstalk do not exceed the values permitted by the system in which the module is to be connected (e.g., for the homodyne in-band crosstalk the worst case (sum of contributions in phase) is < -35 dB);
- the insertion of selected components along the loop paths: it is necessary to determine which channel has the maximum value of IL, with respect to which the difference of IL in each other channel is calculated.

If the performance of the modular filter also requires the suppression of the crosstalk contributions, it is possible to connect filters having a bandwidth greater than or equal to the channel bandwidth of the AWG along the branches $B_1$, $B_2...B_{N/2}$. This is because the spectral characteristics of the filter must be such that the band of the channels at the output of Au is not reduced with respect to the performance obtained for the double passage through the AWG; the maximum bandwidth and the out-of-band profile depend on the required suppression of the crosstalk contributions.

If, for example, 200 GHz grating interference filters are to be used for a modular filter with an inter-channel spacing of 100 GHz, for each wavelength it is necessary to consider the contributions to the crosstalk which cannot be eliminated (in other words those due to direct crosstalk from the port Ai to Au and the contribution at the same wavelength which is propagated along the same branch $B_i$ in the opposite direction to the signal) and the contributions which are propagated along the adjacent branches $B_{i-1}$ and $B_{i+1}$, further attenuated by approximately 10 dB. With this selection, the bandwidth of the filter is such that the adjacent wavelengths spaced 100 GHz apart are attenuated by 9-10 dB with respect to the central wavelength, while those spaced 200 GHz apart are reduced by approximately 35 dB. Therefore the contributions to the in-band crosstalk which are propagated along the remaining branches are entirely negligible.

A filter as described above can advantageously be connected in a multiple-wavelength telecommunications system comprising two terminal stations, one for transmission and one for reception.

In particular, the transmission station comprises N>1 transmitters of optical signals, each at one wavelength.

The number N of independent wavelengths used for the signals of each transmission station, corresponding to the number of optical channels which can be used for transmission, can be selected according to the characteristics of the telecommunications system.

The optical transmitters included in the transmission stations are transmitters with direct modulation or with external modulation, according to the system requirements; these requirements can be related, in particular, to the chromatic dispersion of the optical fibres of the system, to their wavelength and to the specified transmission speed.

The output of each of the transmitters of the transmission stations is connected to a corresponding multiplexer which combines the corresponding optical signals and sends them to a single output which is connected to the input of optical power amplifiers. In general, the multiplexers are passive optical devices, by means of which the optical signals transmitted along corresponding optical fibres are superimposed in a single fibre; devices of this type consist, for example, of fused fibre, planar optic, micro-optic and similar couplers.

An example of a suitable coupler is the one marketed under the symbol SMTC2D00PH210 by E-Tek Dynamics Inc., 1885 Lundy Ave., San Jose, CA, USA.

The power amplifiers raise the level of the signals generated by the transmission stations to a value sufficient to pass through the next length of optical fibre interposed before the reception station or before amplifier means maintaining a sufficient power level at the terminal to guarantee the required transmission quality.

For the purposes of the present invention and for the application described above, a suitable power amplifier is, for example, a fibre optical amplifier of the commercial type, having an input power from -13.5 to -3.5 dBm and an output power of at least 13 dBm.

An example of a suitable model is the TPA/E-MW, marketed by the applicant, and using an active optical fibre doped with erbium.

Each of the power amplifiers is then connected to a corresponding length of optical line, usually consisting of a single-mode optical fibre, of the step index type, inserted in a suitable optical cable, a few tens (or hundreds) of kilometres in length: for example, with the amplifier means described below and the indicated power levels, approximately 100 kilometres.

At the termination of each of the said lengths of optical line there is one or more intermediate stations for amplifying the optical signal, each station comprising line amplifiers capable of receiving the signal which has been attenuated in its travel along the fibre, and of amplifying it to a sufficient level to be fed to a plurality of corresponding subsequent lengths of optical line, covering the total transmission distance required until it reaches a preamplifier or a further amplification station, as appropriate. The term "preamplifier", in the context of the present invention, denotes an amplifier designed to compensate for the losses in the last length of optical line and the insertion losses in the subsequent demultiplexer stages, in such a way that the signal entering the receiving stations has a power level suitable for the sensitivity of the device. The preamplifier also has the function of limiting the dynamics of the signals, by reducing the variation of the power level of the signals entering the receiver with respect to the variation of the power level of the signals arriving from the transmission line. A type of preamplifier suitable for use for the preamplifiers is, for example, an optical amplifier using an erbium-doped active optical fibre of the commercial type, having a total input power from -20 to -9 dBm and an output power of 0-6 dBm.

A suitable model is, for example, the RPA/E-MW, marketed by the applicant.

The optical signals multiplexed at the output of the preamplifiers arrive at corresponding demultiplexers which are capable of separating the signals and sending them to N output optical fibres, according to the corresponding wavelengths, the signals then being transmitted to the corresponding N receivers present in the receiving station. An example of a demultiplexer suitable for use in the present transmission system is the demultiplexer described in patent application EP854601 filed by the present applicant.

If the optical signals to be transmitted are generated by signal sources which have their own transmission characteristics (such as wavelength, type of modulation, power) which are different from those specified for the described connection, each transmission station comprises interface units capable of receiving the optical signals generated by the transmission stations, detecting them, regenerating them with new characteristics suitable for the transmission system, and sending them to the multiplexers.

US Patent 5,267,073 in the name of the present applicant describes interfacing units comprising, in particular, a transmission adapter capable of converting an incoming optical signal into a form suitable for the optical transmission line, and a receiving adapter, capable of reconverting the transmitted signal into a form suitable for a receiving unit.

For use in the system, the transmission adapter preferably comprises an externally modulated laser as the output signal generation source.

The present optical fibre telecommunications system provides, in addition to the channels intended for the communication signals and made available to the users, an independent channel for the transmission of service signals. A system comprising channels intended for service signals is described in US Patent 5113459 in the name of the applicant.

These service signals may be of various kinds, for example signals for the alarm system, for the monitoring or operation of equipment located along the line, such as repeaters or amplifiers, or for communications between the maintenance personnel operating at one point of the line and an intermediate or terminal station of the line.

In these cases, it is therefore necessary to introduce into the communication line further signals, which may be received and injected at any intermediate station or at the terminal stations. These service signals are transmitted at a wavelength significantly different from the communication wavelength, in other words one which can be separated by means of a suitable dichroic coupler.

Although the injection of the service signals into the optical line and their extraction from it are conveniently executed at the terminal stations of the line and at the line amplifiers, as described above, dichroic couplers and corresponding service signal receiving and transmission stations may also be introduced in any other position of the optical fibre line where they are required.

Optical amplifiers generally comprise at least one active fibre doped with a rare earth, capable of amplifying the multiple-wavelength transmission signal in response to a supply of light radiation at a pumping wavelength.

This pumping wavelength is different from that of the transmission signals and is produced by at least one pumping source of the said active fibre, having an optical power which can be controlled by a control unit of the station within which the amplifier is located; by way of example, this source may be a laser The amplifier also comprises a coupling device for sending the said pumping radiation and the said transmission signal into the active fibre.

A modular filter according to the present invention may advantageously be connected along the said line at the intermediate amplifier stations to permit extraction from and/or insertion into one or more optical channels.

Figure 3 shows an embodiment of the signal processor device P which comprises a switch S, having two inputs $I_1$ and $I_2$ and two outputs $E_1$ and $E_2$, which, in response to a suitable operating signal, is capable of sending the signal passing through each of the two inputs $I_1$ or $I_2$ to one of the two outputs $E_1$ and $E_2$ selectively. The input $I_1$ is suitable for connection to a source of an optical signal (not shown in the figure) modulated by a data element, for example a laser diode which may be associated with an optical modulator. The output $E_2$ is designed to be connected to an optical receiver capable of converting the optical signal into an electrical signal carrying the same information. This switch therefore has two operating states: in one case, determined by a specified operating signal, a signal at a wavelength $\lambda_i$ inserted at the input $I_1$ is sent to the output $E_2$ and a signal $\lambda_i'$ inserted at the input $I_2$ is sent to the output $E_1$; in the second case, with a different operating signal, the same input signals are inverted at the outputs. The switch is also connected in series to a selective filter 4 having a spectral response such that the wavelengths necessary for the branch in question can be propagated and having an attenuation calibrated as described above for the equalization of the components of the WDM signal. The filters suitable for this purpose are wavelength-selective filters, for example those using in-fibre gratings to transmit a particular wavelength and reflect all the others. Further types of filters suitable for the purpose are, for example, filters made by micro-optical technology and interference filters.

These devices may be selected in such a way that the switch with minimum IL is assigned to the wavelength of the channel which has the maximum IL: this path provides the insertion loss $IL_{MAX}$ from Ai to Au. For each remaining wavelength, a component having an IL as close as possible to the difference between $IL_{MAX}$ and the insertion loss due to the travel within the AWG will be connected. The switch S is connected in series with an attenuator A whose value of IL is selected by the procedure described above, or a filter F selected to have a bandwidth such that it eliminates the contributions at wavelengths other than that which nominally circulates in the branch.

In the example described, the switch is advantageously used to carry out the function of extraction and insertion of a WDM signal from and into a channel. In this case, the extracted wavelength $\lambda_i$ must be nominally equal to the reinserted wavelength $\lambda_i'$.

A switch suitable for this function must conform to the specific characteristics of the system in which the filter is connected, and therefore the switching rate depends directly on the maximum period of interruption of a signal in the line which is permitted before the system detects an anomaly. For example, in the SDH communication standard this period is a maximum of 50 msec, and therefore the switch must have a significantly higher switching rate. For example, a thermal-optical switch provides a switching rate of the order of 2 msec and an insertion loss of 0.5 dB, but its isolation is not very high, at 15 to 27 dB.

An optomechanical switch provides a switching time of approximately 10 ms, an insertion loss of approximately 0.5 dB and an isolation of more than 50 dB.

Figure 4 shows an operating circuit for a modular filter in an embodiment which comprises a signal processor device of the type shown in Fig. 3 in each of the branches.

This filter can process a WDM signal with a maximum of N/2 wavelengths (one channel only for each branch).

By using a different channel processor, it is possible to extend the use of an NxN AWG in "foldback" configuration to process up to N channels. It should be noted that, if the number of wavelengths of the WDM signal is M, where $N/2 < M \leq N$, there are two channels at different wavelengths $\lambda_i$, and $\lambda_{i+N/2}$ propagated in opposite directions in M-N/2 of the branches Bi which form the "foldback" paths.

Figure 5 shows an embodiment of a signal processor device P which can advantageously extend the capacity of the modular filter from N/2 to N channels. This processor comprises a first wavelength multiplexer/demultiplexer $M_1$ which separates into two branches $R_1$ and $R_2$ signals at different wavelengths $\lambda_i$ and $\lambda_{i+N/2}$ from a port $H_1$, and a second wavelength multiplexer/demultiplexer $M_2$ which recombines the signals of the two branches $R_1$ and $R_2$ at a port $H_2$. A switch S, of the type illustrated in Figure 3 and described previously, which can extract and reinsert a signal at a given wavelength from and into the branch, is present in each of the two branches $R_1$ and $R_2$.

In this device, therefore, two signals, having two corresponding optical signals at different wavelengths $\lambda_i$ and $\lambda_{i+N/2}$ which travel in opposite directions and are inserted, in the first case, at the port $H_1$ and, in the second case, at the port $H_2$, are sent, in the first case ($\lambda_i$), along the branch $R_1$, and in the second case ($\lambda_{i+N/2}$) along the branch $R_2$. In each of the said branches, the signal is extracted and inserted by means of a corresponding switch S. The processed signals are sent to the corresponding ports $H_2$ ($\lambda_1$) and $H_1$ ($\lambda_{i+N/2}$).

It should be noted that the operation of the signal processor device in Figure 5 is bidirectional; this ensures that the modular filter using these processors is also bidirectional, since the AWG is intrinsically a component having this characteristic. This is because the signals at the wavelengths $\lambda_i$ and $\lambda_{i+N/2}$ travel in opposite directions to each other; the first wavelength multiplexer/demultiplexer $M_1$ sends the signal at wavelength $\lambda_i$ along the branch $R_1$, and suppresses all the other components which may be present. In the opposite direction, the second wavelength multiplexer/demultiplexer $M_2$ sends the signal at wavelength $\lambda_{i+N/2}$ along the branch $R_2$ in the opposite direction to the signal $\lambda_i$ and suppresses all the other components which may be present.

Figure 6 shows an alternative embodiment of the signal processor device P in Figure 5, which comprises two signal division/combination devices $D_1$ and $D_2$ which respectively divide the power of the signal arriving from port $H_1$ and the signal arriving in the opposite direction from the port $H_2$, along the branches $R_1$ and $R_2$. A filter $F_{i+N/2}$ tuned to a wavelength $\lambda_{i+N/2}$ and a switch S of the type shown in Figure 3 are connected in series in the branch $R_1$. A switch S of the type shown in Figure 3 and a filter $F_i$ tuned to a wavelength $\lambda_i$ are connected in series in the branch $R_2$. The devices D1 and D2 then operate to recombine the signals from $R_1$ and $R_2$ respectively at the outputs $H_1$ and $H_2$. Consequently, a signal having a wavelength $\lambda_i$ inserted at the port $H_1$ is divided into both branches $R_1$ and $R_2$; in the branch $R_1$ there is a filter tuned to the wavelength of the signal $\lambda_{i+N/2}$ which therefore suppresses the signal $\lambda_i$ before it reaches the switch S; in the branch $R_2$, the signal $\lambda_i$ is processed, as described previously, by the switch S and passes unchanged through the filter $F_i$ and emerges from the output $H_2$, through $D_2$. The signal at $\lambda_{i+N/2}$ is processed in a similar way along the path $R_1$ and is suppressed in the path $R_2$. The signal division/combination devices $D_1$, $D_2$ are, for example, fused fibre or planar optics dividers.

The filters $F_1$ and $F_{i+N/2}$ are wavelength-selective, using, for example, in-fibre gratings to transmit a particular wavelength and reflect all the others. Further types of filters suitable for the purpose are, for example, filters made by micro-optical technology and interference filters.

In the preceding embodiments shown in Figure 5 and Figure 6 there are filters ($M_1$, $M_2$ in Fig. 5 and $F_i$, $F_{i+N/2}$ in Fig. 6) which suppress the crosstalk according to the present invention. In the embodiment shown in Figure 5, the wavelength multiplexers/demultiplexers $M_1$, $M_2$ separate the two wavelengths circulating in this branch, each in its direction of propagation, and cause the substantial suppression of all the others. Similarly, in the embodiment shown in Figure 6 the filters $F_i$ and $F_{i+N/2}$ suppress all the signals at wavelengths other than those which nominally circulate in the branch, namely $\lambda_{i+N/2}$ and $\lambda_i$, and consequently substantially reduce the crosstalk and equalize the remultiplexed signal after insertion into the AWG.

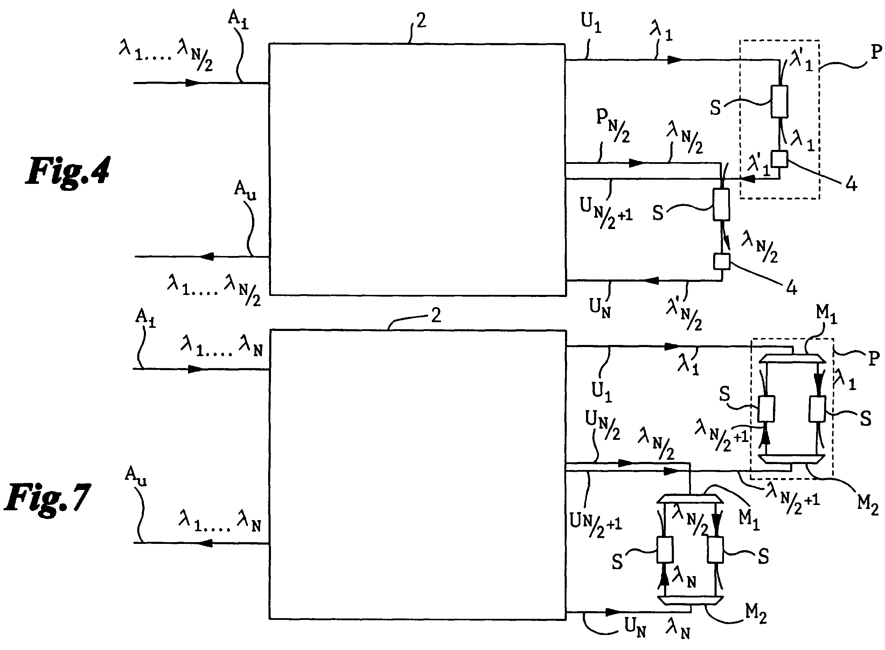

Figure 7 shows an operating circuit for a modular filter in an embodiment operating on N wavelengths which comprises signal processor devices of the type in Figure 5.

In this case also, the input and output are selected in such a way that $\lambda_i$ is present at the output $U_i$. By using a number $j < N/2$ of signal devices of the type shown in Figure 5 and, for example, using N/2-j other signal processing devices of the type shown in Figure 3, it is similarly possible to construct a modular filter capable of operating at N/2+j predetermined wavelengths.

In all the preceding configurations, if the operation of extracting the channels and reinserting them into the line has not been carried out on all the channels which travel along the line, and consequently if the signal processor P is not connected in all the branches B, or if processors P whose degrees of attenuation differ from each other are present in some branches, in order to counterbalance in power terms the losses introduced in the channels which are extracted, it is possible to connect in the branches not containing the processor device P an attenuator with its attenuation determined in such a way as to keep the output channels balanced. A similar attenuator can also be associated with the extracted channels or with those to be inserted, to adapt their power in accordance with the subsequent use.

The signal processors $P_1...P_{N/2}$ present in one or more branches, shown in Figures 5 and 6 and described previously, are capable of extracting and inserting the signals travelling in both directions in the branch in question.

The configuration described can also be extended advantageously to the case in which an NxN AWG is used and a number of channels M, which is greater than the number of ports N of the AWG, is to be processed.

This is because an advantageous characteristic of the filter according to the present invention is its modularity. The "foldback" configuration makes it possible to use a cascade of AWGs connected in a multiple-stage configuration. At each stage, the channels are divided into groups containing a sub-multiple of the channels which enter this AWG stage, until all the channels separated from each other individually or in pairs for each foldback path ($B_i$ in Figure 2), and therefore processed by one or more processor units similar to those in Figure 3, 5 or 6, are obtained in the final stage with the outputs connected in foldback. The separation takes place progressively from one stage to the next. In this embodiment, in order to process a WDM signal having N components at different wavelengths, it is necessary to use AWGs with a number of ports $N_i$ which may be considerably smaller (<= M/2) than the number of channels M, and this configuration may therefore be extended to WDM signals with an arbitrarily large number of channels.

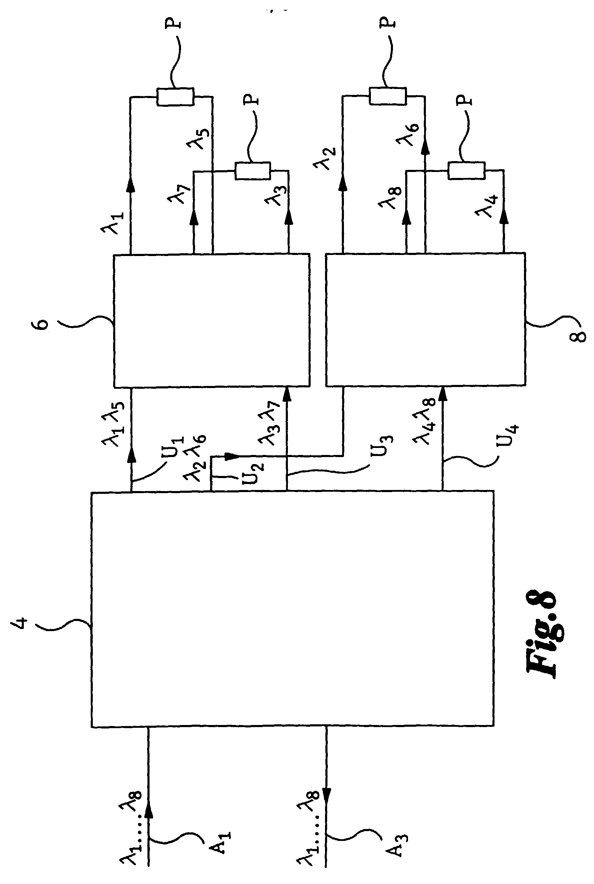

Figure 8 shows a configuration of this type illustrated by way of example with a WDM signal which comprises 8 different components $\lambda_1...\lambda_8$. In this configuration, there are three AWGs with $N_i$ = 4 outputs and four signal processor devices according to Figure 5. In particular, a first stage contains an AWG 4 with FSR = $4 \cdot \Delta\lambda_4$, where $\Delta\lambda_4$ is the spacing between the channels of the WDM signal at the input of the said AWG. The WDM signal is sent to the input $A_1$ of this AWG and, having been reprocessed and after insertion and extraction, exits from the port $A_3$. This AWG separates the channels into pairs N/2 channels apart at each of the outputs $U_1...U_4$. Each of the first two pairs of signals $\lambda_1$, $\lambda_5$, and $\lambda_3$, $\lambda_7$ is sent to an input of a second AWG 6 which acts on beams whose spacing is twice that of the AWG 4; this second AWG has an $FSR_2 = 4x\Delta\lambda_6$, where $\Delta\lambda_6 = 2 \cdot \Delta\lambda_4$. Similarly, each of the pairs of signals $\lambda_2$, $\lambda_6$, and $\lambda_4$, $\lambda_8$ is sent to an input of a further AWG 8 with spacing characteristics and FSR similar to those of the AWG 6. The two AWGs 6 and 8 which form the second stage of the filter have, at their outputs, connections of the "foldback" type along which are propagated, in opposite directions, two channels which are then processed by a signal processor device as shown in Figure 5 or Figure 6, which extracts and inserts the channels in a way similar to that described with reference to the filter in Figure 7.

The configurations of the "foldback" type according to the invention not only make it possible to obtain filters with a high uniformity of channel loses, but also offer considerable advantages for the crosstalk performance by comparison with the preceding configurations of the "loopback" type.

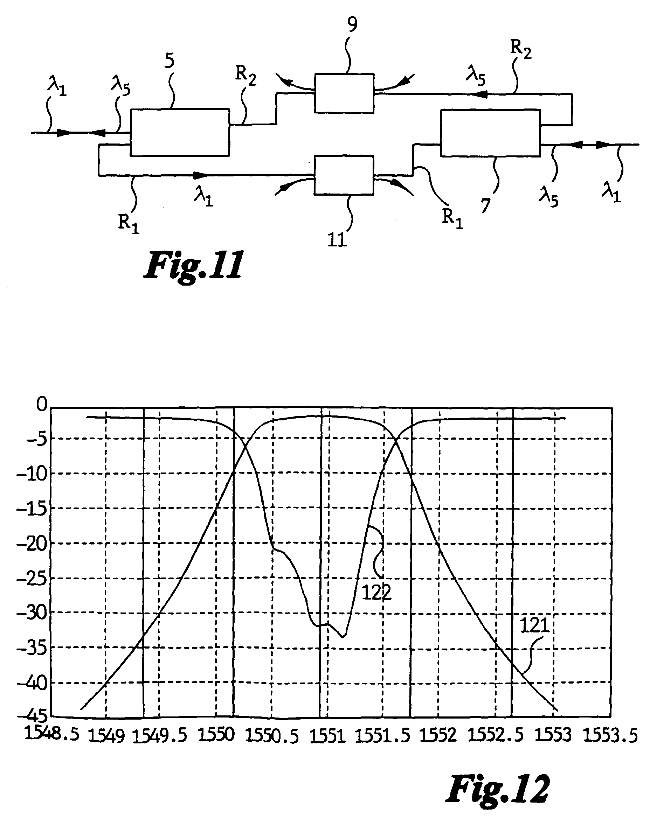

Figure 9 shows the generic path of a channel in a configuration of the "foldback" type in which the WDM signal is inserted at the port i and passes initially into the AWG 2, after which the signal having a wavelength $\lambda_k$ exits from the port k and is reinjected into the AWG at the port h by means of the branch k-h; the reconstructed WDM signal then exits at the port j and also includes all the noise contributions generated by the in-band crosstalk.

By comparison with Figure 1, it may be demonstrated that all the more significant in-band crosstalk contributions are of the second order, in other words generated by a double passage along paths in which the signal is nominally cancelled; additionally, by using signal processor devices of the type shown in Figure 5 or 6, it is possible to select the spectral response of the wavelength multiplexer/demultiplexers $M_1$ and $M_2$ shown in Figure 5 and of the filters $F_i$ and $F_{i+N/2}$ shown in Figure 6 in such a way as to inhibit all the contributions $X_{ip,qj}(\lambda_k)$ shown in Figure 9, where $X_{ip,qj}(\lambda_k)$ represents the noise contribution at the wavelength $\lambda_k$ which is sent from the port i to another generic port p, and which, when reinserted into the AWG at the port q by means of the branch p-q, is superimposed at the output port j on the signal at the same wavelength.

Therefore the dominant contributions of in-band crosstalk in a circuit of the "foldback" type are:

$$\frac{X_{ih}(\lambda_k) \cdot X_{kj}(\lambda_k)}{\alpha_{ik}\alpha_{hj}} \quad \frac{D_{ij}(\lambda_k)}{\alpha_{ik}\alpha_{hj}}$$

The first contribution is defined as being due to what is called the "inverse path", in other words the path followed by part of the signal at the wavelength $\lambda_k$ in the direction opposite the signal at the same wavelength in the branch B; the second contribution is due to the input-output directivity, in other words the part of the signal at the wavelength $\lambda_k$ which is nominally cancelled and is coupled directly from the input port to the output.

Generally, $x_{ih}(\lambda)$, $D_{ij}(\lambda)$ and $\alpha_{ik}$ are substantially uniform regardless of the variation of the indices and of the wavelength in the working band of the AWGs. The typical values are indicated as x, D and $\alpha$ respectively.

Given the typical values of D, $\alpha$ and X/$\alpha$ in commercial devices, we find that both contributions are 30 dB greater, and therefore their effect is negligible, since the critical limit for the systems is estimated to be approximately 25 dB.

The modular filter whose configuration is shown in Figure 10 was constructed for experimental purposes; it is an embodiment of a combination of the circuits shown in Figure 4 and Figure 7.

This modular filter consists of an 8x8 AWG 2, made by PIRI (USA), of the narrowband type (band at 3 dB = 40% of the channel spacing), capable of processing wavelengths with a spacing of 1.6 nm (200 GHz); the FSR of the AWG is 8 x 1.6 = 12.8 nm. The ports selected for the input and output of the constructed modular filter are 2 and 6 respectively; the other ports of the AWG, located on the same side as the input and output, are terminated with adapters 3 in such a way as to prevent undesired reflections.

The WDM signal used for the experiment consisted of 5 channels spaced 1.6 nm apart; having the following wavelengths in nm:

$\lambda_1$: 1550.92
$\lambda_2$: 1552.52
$\lambda_3$: 1554.13
$\lambda_4$: 1555.75

$\lambda_5$: 1557.36

With this selection of the input and output, the following connections are made at the outputs of the AWG, as shown in Figure 10:

$U_5$-$U_1$ ($\lambda_1$, $\lambda_5$); $U_6$-$U_2$ ($\lambda_2$); $U_7$-$U_3$ ($\lambda_3$); $U_8$-$U_4$ ($\lambda_4$).

Since one of the foldback branches has two channels passing through it in opposite directions of propagation, a processor device of the type shown in Figure 5 is used in this branch, while a device of the type shown in Figure 3 is sufficient for all the other branches.

In particular, the branch 5-1 has the wavelength $\lambda_1$, propagated from the port 5 to the port 1, and the wavelength $\lambda_5$, propagated in the opposite direction. The other wavelengths are processed by the other branches as shown below:

$\lambda_2$: from $U_6$ to $U_2$
$\lambda_3$: from $U_7$ to $U_3$
$\lambda_4$: from $U_8$ to $U_4$

The processor device P' used in the branch having two wavelengths is constructed as shown in Figure 11. The WDM units 5 and 7 (multiplexers/demultiplexers) which are used are interference devices marketed by JDS; in particular, Figure 12 shows the transfer function of the multiplexer/demultiplexer device 5 whose central wavelength is $\lambda_1$. The reflection insertion loss (IL) is indicated by the curve 121 and the transmission insertion loss is indicated by the curve 122.

The optical switches 9 and 11, like the switches 13 in Figure 10 which are used in the other branches of the modular filter, are of the 2x2 optomechanical type, and are again marketed by JDS. The measured optical loss of the signal in the pass branch (in Figure 11: R1 for $\lambda_1$ and R2 for $\lambda_5$) is 2.3 dB.

The in-band crosstalk generated by the passage of the signals through the nominally isolated branches (in Figure 11: R1 for $\lambda_5$ and R2 for $\lambda_1$) is 40.7 dB.

With reference to Figure 10, the fixed attenuators 15, having a value of 2 dB and produced by TELE.S (Italy), have been introduced into the branches having single wavelengths, in series with the switches, in order to balance the losses in these branches with respect to the branch containing the processor of the type shown in Figure 5.

The measured performances of the modular filter are summarized in the following Table 1, where IL is the loss of the optical input-output path, XTL is the in-band crosstalk contribution of the 2nd order due to what is called the "inverse path" shown in Figure 9, and DXT is that due to the directivity between the input and output:

Table 1

| $\lambda$ | IL (dB) | XTL (dB) | DXT (dB) |
|---|---|---|---|
| $\lambda_1$ | 12.3 | 53.2 | 44.4 |
| $\lambda_2$ | 11.6 | 49.4 | 33.4 |
| $\lambda_3$ | 12.0 | 53.6 | 43.1 |
| $\lambda_4$ | 12.1 | 54.1 | 53.7 |
| $\lambda_5$ | 12.3 | 53.1 | 44.4 |

As will be noted, the losses are uniform over all the channels and the in-band crosstalk contributions are much better than the critical limit for the systems.

In an alternative configuration, a modular filter according to the present invention may have N/2 foldback branches $B_i$ on the N outputs, arranged in such a way that they interconnect the remote ports positioned N/2 apart, in which branches no signal processor device is present. These branches return the signal leaving from one port to the port connected to it by the corresponding branch. When a wide-band light source is connected to one of the input ports of the AWG, this source preferably having a spectral width greater than that of the AWG, a multiple-wavelength signal is generated on the remaining input port, the components of this signal being determined by the characteristics of spectral response of the AWG.

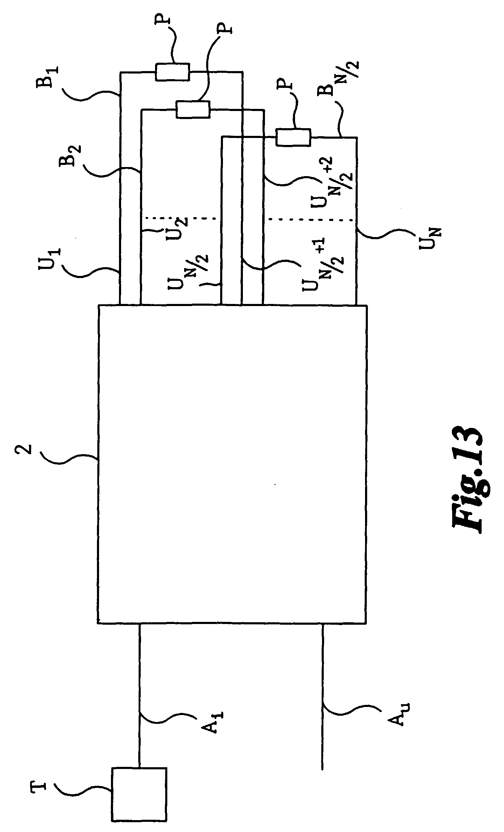

This configuration is shown in Figure 13, in which a wide-band transmitter T is connected to an input port of an NxN AWG 2 whose N output ports $U_1$...$U_N$ are connected in the previously described foldback configuration, forming N/2 branches $B_1$...$B_{N/2}$. In each of the branches, according to the present invention, there is a signal processor device $P_1$...$P_{N/2}$ which comprises an attenuator or a filter with a spectral response such that the wavelengths necessary for the branch in question can be propagated and with insertion losses calibrated in such a way that the suppression of the crosstalk contributions is possible in addition to the equalization of the losses. It is therefore possible to generate a multiple-wavelength signal by using an AWG in foldback configuration and a wide-band light source.

Additionally, if a modulator which superimposes a data element at radio frequency on the signal circulating in the branch is connected in an advantageous way in each fold back branch $B_i$ or alternatively in some branches only, this will produce a multiple-wavelength signal transmitter for a telecommunications line. The said modulator is an external modulator, in other words a modulator in which the information is superimposed on a pre-existing optical signal, in this case the signal circulating in the branch. A modulator of a known type suitable for this purpose is, for example, an electro-optical modulator, in particular a modulator of the Mach-Zehnder type, or alternatively an electro-absorption modulator or an acousto-optical modulator.

**Claims**

1. Optical telecommunications system comprising:

   - at least one transmission station capable of transmitting a multiple-wavelength optical signal comprising at least two predetermined wavelengths;
   - a wavelength division multiplexer for sending the said transmission signals to an optical fibre transmission line;
   - at least one station for receiving the said transmission signals;
   - the said optical fibre line connecting the said transmission and receiving stations;
   - a modular filter for extracting and/or inserting and/or processing optical signals, comprising:

     - a wavelength multiplexer/demultiplexer device having at least two first ports for connection to the said line and a number N of second ports into which the said wavelengths are divided;
     - a number Q, less than or equal to N/2, of branches which interconnect 2Q of the said N second ports into which the said wavelengths are divided,

   characterized in that at least one of the said branches comprises a signal processor device for at least one of the wavelengths circulating in the branch.

2. System according to Claim 1, characterized in that the said modular filter introduces an in-band crosstalk of the said multiple-wavelength optical signals of less than 40 dB.

3. Modular filter for extracting and/or inserting or processing optical signals in multiple-wavelength optical telecommunications systems, comprising:

   - a wavelength multiplexer/demultiplexer device having at least two first ports for a multiple-wavelength signal and a number N of second ports into which the said wavelengths are divided;
   - a number Q, less than or equal to N/2, of branches which interconnect 2Q of the said N second ports into which the said wavelengths are divided,

   characterized in that it has, in at least one of the said branches, a signal processor device for at least one of the wavelengths circulating in the branch.

4. Modular filter according to Claim 3, in which the said signal processor device comprises a wavelength-selective filter.

5. Modular filter according to Claim 3, in which the said signal processor device comprises an attenuator.

6. Modular filter according to the preceding claims, in which the said signal processor device comprises a switch (S).

7. Modular filter according to Claims 3 to 5, in which the said signal processor device comprises

   - a first signal multiplexer/demultiplexer $(M_1)$ capable of separating the wavelengths of the signals from one of the said second ports $(H_1)$ into at least two branches $(R_1)$ and $(R_2)$;
   - a second multiplexer/demultiplexer $(M_2)$ capable of combining the said wavelengths of the signals from the two branches $(R_1)$ and $(R_2)$ at another of the said second ports $(H_2)$;
   - a switch (S) connected in at least one of the two branches $(R_1)$ and $(R_2)$.

8. Modular filter according to Claims 3 to 5, in which the said signal processor device comprises

   - a first signal divider device $(D_1)$ capable of dividing the signal injected into one of the said second ports $(H_1)$ into a first branch $(R_1)$ and a second branch $(R_2)$;
   - a filter $(F_i)$ tuned to a first wavelength and a switch (S) connected in series in the first branch $(R_1)$;
   - a filter $(F_j)$ tuned to a second wavelength different from the first, connected in the second branch $(R_2)$;
   - a second signal divider device $(D_2)$, capable of dividing a signal injected at another of the said second ports $(H_2)$ into the two branches $(R_1)$ and $(R_2)$, and of recombining the said signals.

9. Modular filter according to the preceding claims, in which the said N/2 branches are connected to the said device in such a way as to interconnect N/2 remote second ports.

10. Modular filter according to the preceding claims, in which the said switch (S) comprises two input ports $(I_1)$ and $(I_2)$ and two output ports $(E_1)$ and $(E_2)$, and is capable of sending the signal passing through each of the two inputs $(I_1)$ or $(1_2)$ selectively to either of the two outputs $(E_1)$ and $(E_2)$ in response to an operating signal.

11. Modular filter according to Claim 3, in which the said wavelength multiplexer/demultiplexer device comprises an AWG having at least 2 input ports and N output ports.

12. Modular filter according to Claim 3, in which the said signal processor device comprises an additional AWG having at least two input ports and N output ports.

13. Modular filter for generating optical signals for multiple-wavelength telecommunications systems, comprising:

- a wavelength multiplexer/demultiplexer device having at least a first port for receiving a wide-band signal and a number N of second ports in which the said signal is divided into at least N wavelengths and a third port for the output of the said optical channels;
- a transmitter having a spectral amplitude greater than that of the said wavelength multiplexer/demultiplexer device,

characterized in that it has

N/2 branches which interconnect the said N second ports into which the said wavelengths are divided, and which are connected in such a way as to associate the N/2 remote ports with each other.

14. Modular filter for generating optical signals according to Claim 13, in which a wavelength-selective filter is connected in at least one of the said branches.

15. Modular filter for generating optical signals according to Claim 13, in which an attenuator is connected in at least one of the said branches.

16. Modular filter for generating optical signals according to Claim 13, in which a radio-frequency modulator is connected in at least one of the said branches.

17. Method for processing a multiple-wavelength signal, characterized in that it has the following stages:

- dividing the wavelengths of the said multiple-wavelength signal present at an input port of a wavelength multiplexer/demultiplexer device among a number N of intermediate ports, in such a way that one or more nominal wavelengths are associated with each port;
- sending the said divided wavelengths to a number of branches less than or equal to N/2;
- extracting from at least one of the said branches at least one of the signals circulating in the branch;
- selectively filtering in each branch the signals at the nominal wavelengths circulating in the branch in question;
- reinjecting these signals into a different intermediate port of the said multiplexer/demultiplexer device;
- re-multiplexing the said signals at an output of the said multiplexer/demultiplexer device.

18. Method for processing a multiple-wavelength signal according to Claim 17, characterized in that the stage of selectively filtering in each branch additionally comprises the stage of attenuating the signals circulating in the branches, by a predetermined amount for each signal.

19. Method for processing a multiple-wavelength signal according to Claim 17, characterized in that the stage of reinjecting these signals comprises reinjecting these signals into a total of N/2 remote intermediate ports.

20. Method for reducing the crosstalk in an NxN AWG which processes a multiple-wavelength signal, characterized in that it comprises the following stages:

- sending a multiple-wavelength signal to an input of the said AWG;
- dividing the components of the WDM signal into a number N of output ports of the said AWG;
- sending the said divided wavelengths to N/2 branches;
- selectively filtering in each branch, the signals at the nominal wavelength circulating in the branch in question;
- reinjecting these signals by means of the said N/2 branches into the same AWG;
- multiplexing the said signals by means of the same AWG;
- extracting the re-multiplexed multiple-wavelength signal from an output of the said AWG.

**Fig.1**

**Fig.9**

**Fig.10**

Fig.2

Fig.3

Fig.5

Fig.6

*Fig.4*

$\lambda_1 .... \lambda_{N/2}$

$A_1$

2

$U_1$ $\lambda_1$

$\lambda'_1$ P

$A_u$

$\lambda_1 .... \lambda_{N/2}$

$P_{N/2}$ $\lambda_{N/2}$

$U_{N/2+1}$ S

S

$\lambda'_1$

$\lambda_1$

$\lambda'_1$

4

$\lambda_{N/2}$

$U_N$ $\lambda'_{N/2}$

4

*Fig.7*

$A_1$

$\lambda_1 .... \lambda_N$

2

$U_1$ $\lambda'_1$

$M_1$

$\lambda_1$ P

$A_u$

$\lambda_1 .... \lambda_N$

$U_{N/2}$ $\lambda_{N/2}$

$U_{N/2+1}$

S

$\lambda_{N/2+1}$

S

$M_2$

$\lambda_{N/2+1}$

$M_1$

$\lambda_{N/2}$

S

S

$\lambda_N$

$U_N$ $\lambda_N$

$M_2$

*Fig.8*

**Fig.11**

**Fig.12**

EP 1 004 908 A1

Fig.13

European Patent Office

**EUROPEAN SEARCH REPORT**

Application Number

EP 99 20 3784

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 591 042 A (NIPPON TELEGRAPH & TELEPHONE) 6 April 1994 (1994-04-06) * abstract; figures 1,2D,16 * * column 4, line 9 - line 49 * * column 6, line 29 - column 7, line 51 * * column 16, line 29 - column 17, line 20 * | 1,3,13, 17,20 | G02B6/293 H04J14/02 |
| A,D | ISHIDA O ET AL: "MULTICHANNEL FREQUENCY-SELECTIVE SWITCH EMPLOYING AN ARRAYED -WAVEGUIDE GRATING MULTIPLEXER WITH FOLD-BACK OPTICAL PATHS" IEEE PHOTONICS TECHNOLOGY LETTERS, vol. 6, no. 10, 1 October 1994 (1994-10-01), pages 1219-1221, XP000476947 * the whole document * | 1,3,13, 17,20 | |
| A | EP 0 829 979 A (KOKUSAI DENSHIN DENWA CO LTD) 18 March 1998 (1998-03-18) * abstract; figures 1,10 * * column 2, line 40 - column 5, line 13 * | 1,3,13, 17,20 | |

TECHNICAL FIELDS SEARCHED (Int.Cl.7)

G02B

The present search report has been drawn up for all claims

| Place of search | Date of completion of the search | Examiner |
|---|---|---|
| THE HAGUE | 2 March 2000 | Jakober, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 20 3784

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2000

| Patent document cited in search report | | Publication date | Patent family member(s) | | Publication date |
|---|---|---|---|---|---|
| EP 0591042 | A | 06-04-1994 | CA | 2107181 A | 30-03-1994 |
| | | | DE | 69311048 D | 03-07-1997 |
| | | | DE | 69311048 T | 11-12-1997 |
| | | | JP | 7098424 A | 11-04-1995 |
| | | | US | 5414548 A | 09-05-1995 |
| EP 0829979 | A | 18-03-1998 | JP | 10093164 A | 10-04-1998 |

EPO FORM P0469

For more details about this annex : see Official Journal of the European Patent Office, No. 12/82